# EUROPEAN PATENT SPECIFICATION

(11) **EP 0 598 042 B1**
(45) Date of publication and mention of the grant of the patent: **08.05.1996**
(21) Application number: 92917891.1
(22) Date of filing: 03.08.1992
(51) Int. Cl.: B65H 21/00

(54) **METHOD AND DEVICE FOR SPLICING TWO THIN WEBS OF MATERIAL**
VORRICHTUNG UND VERFAHREN ZUM VERBINDEN VON ZWEI DÜNNEN MATERIALBAHNEN
PROCEDE ET DISPOSITIF DE RACCORDEMENT DE DEUX BANDES MINCES DE MATIERE

(30) Priority: 02.08.1991 FR 9109860
(43) Date of publication of application: 25.05.1994
(73) Proprietor: E.I. DU PONT DE NEMOURS AND COMPANY, Wilmington Delaware 19898 (US)
(72) Inventor: HELD, Alfons Nikolaus, L-2146 Luxembourg (LU)
(74) Representative: von Kreisler, Alek, Dipl.-Chem.
(86) International application number: US9206501
(87) International publication number: WO9302955

(56) References cited:
- CH-A- 521 278

## Description

The present invention relates to a method for splicing a first length or web of film material to a second web of film material. It also reLates to a device for carrying out the said method comprising a roll for unwinding a first web of film material to be spliced, a roll for winding film material to be spliced and a splicing table subjected to vacuum and having a cutting groove over which the web of film to be wound or unwound can pass, together with means for applying an adhesive splicing tape.

The splicing of two extremely thin films is a difficult operation involving problems not only in making the actual splice, but also in ensuring that the splice obtained is sufficiently reliable and does not in any way alter the behavior of the thin film material during subsequent processing (application of metallization to the film surface, or even reading and/or writing of information on said film after application of a magnetic material coating thereto) or during winding or unwinding. It is in fact an extremely difficult operation to accurately apply a narrow tape of adhesive film simultaneously onto two prepared end portions of film strip, principally as as a result of the significant electrostatic forces that exist between the two end portions of the static-charged film, prior to bringing the adhesive tape into bonding contact with said film, such electrostatic charges almost always having the effect of causing one of the three elements involved in the splicing operation to move with respect to the two others prior to bonding contact being able to be achieved. Moreover, splices formed in a web of extremely thin film using a narrow strip of splicing tape have to date proved to be totally unsuccessful in withstanding repeated folding and tractional forces to which they may be subject, not as a result of a lack of strength of the bonded surface but rather through the effect of shearing forces that are exercised by two lengths of spliced film in which the ends are in a touching or to all intents and purposes a touching or butt relationship.

A further significant disadvantage of splices provided in thin films that take the form of a butt joint to which a narrow band of splicing tape has been applied results from the sudden shock which is inevitably produced by the excess thickness at the point of splicing when the film passes between guide or drive rolls or even in front of a read and/or write head in the case where the film is used as an information carrier by application of a magnetic material coating thereto, or during other suchlike operations on the tape. Similarly, metallization operations which are currently carried out on films that have been spliced exhibit visual discontinuities and other manifestations in the spliced area.

A method according to the preamble of claim 1 is disclosed in CH-A-521 278. The known method uses two vacuum beams for immobilizing the trailing portion of a first web and the leading portion of a second web. A cutting means having two knife discs, one over the plane of the webs and another one below the plane of the webs, serves for cutting the edge portions of a web. The cutting means is supported by wheels and may be moved across each web. After cutting the edge of the first web, the edge of the second web is cut during a second run of the cutting means. When the cut edges of both webs abutt each other, a carriage is moved across the webs for applying two adhesive strips on the webs, one adhesive strip from above and the other adhesive strip from below.

One object of the present invention consists in providing a method and a device for splicing two lengths of thin film in which accurate joining of the two portions of film is facilitated and partly automated without the participants in the splice being able to move under the effects of static electricity.

A further object is to provide a splice between two portions of thin film which during use is not only as strong when subject to tractional forces as the unspliced film but which also is as strong, when subject to alternating bending forces and to general stresses, as the original film whereby if the film does break, it does not break at the splice but rather at another point on the film.

A further object is to obtain a splice in two lengths of extremely thin film where the splice itself is as thin as possible. To achieve such a thin splice, it should be possible to employ a very thin adhesive splicing tape which, after application to said thin film, is barely thicker than the spliced film, bearing in mind that splices in thin film are currently provided using splicing tape which, in the case of very thin films, is some twenty times thicker than the film itself, in order to obtain sufficient rigidity and mechanical strength from the narrow strip of splicing tape.

The method of the present invention is defined by claim 1.

According to a preferred embodiment of the invention, the adhesive tape carries at the surface thereof two continuous stripes of adhesive which extend up to the region of, but not exactly to the edge of, the lateral sides of said tape where is ceases to be in contact with either of said web portions in order to prevent any overflow of adhesive resulting from supplementary spreading of the adhesive during the passage of said tape over the two film portions to be spliced.

According to another preferred embodiment, the adhesive tape is covered, on the side thereof bearing said continuous stripes of adhesive, with a backing strip or layer in a material exhibiting low adhesion towards said adhesive, said adhesive tape covered with said backing layer being provided in roll form, said roll being unwound onto the facing end portions of the two webs of film to be spliced while removing said backing strip immediately prior to applying said adhesive tape onto the two facing end portions of said webs. During application of the adhesive tape onto the two end portions of said webs to be spliced, the part of said vacuum table comprised between said first and second grooves is maintained under sub-atmospheric pressure in order to retain said adhesive tape firmly pressed onto the end portions of said first and second webs.

The device of the invention has the features of claim 5.

According to an embodiment of the device, it includes a reel for applying an adhesive splicing tape to film web portions retained on said vacuum table by unwinding said adhesive tape therefrom, said application reel being rotatably mounted on a support adapted to move in a direction perpendicular to the plane of said vacuum table up to a position where it no longer hinders the passage of a web of film to a winding unit.

The device can include a carriage able to move along sliding guiding means perpendicular to the longitudinal direction of advance of said web of film and which simultaneously carries in a releasable manner, a roll of adhesive tape that is substantially centered on the two grooves of said vacuum table, said carriage being able to move between an operating position and a non-operating position, at least one cutting unit adapted to apply, in said operating position, a knife blade means into at least one of said grooves in order to cut said web portions of film at positions corresponding to said grooves whereby said cut web portions of film are only separated by the gap between said two parallel grooves. The cutting unit includes a blade holder clamping two thin cutting blades and adapted to pivot about a pivot pin to adopt one of three positions that are manually locked by a locking means, comprising two blade cutting positions and a central non-active position. The cutting unit preferably includes a pivoting arm carrying a press-on roller which is urged towards the surface of the vacuum table by application of spring pressure. The pivoting arm can be manually locked in a non-active position against the force of the spring means by manual locking means.

Further objects, advantages and features of the invention will become more clear from the description of an embodiment thereof which follows and is provided by way of non-limiting example and with reference to the attached drawings.

In the drawings:
FIGURE 1 is a diagrammatical view in perspective of a device for splicing two lengths of thin film using a vacuum table, in accordance with the invention.
FIGURE 2 is a partial front view of the actual vacuum table employed in the splicing device shown diagrammatically in figure 1.
FIGURE 3 is a partial side view, partly in cross-section, of a device for splicing two lengths of film in its operating position with two lengths of film in the process of being spliced.
FIGURE 3a shows detail of figure 3 corresponding to the part thereof within circle A, on an enlarged scale.
FIGURE 4 is a detailed view in cross-section taken along line 4-4 of figure 5a of a film cutting unit and the system for dispensing the adhesive splicing tape in the device for splicing two lengths of film shown in side view in figure 1.
FIGURES 5a and 5b are detailed side views taken in the direction of arrow B in figure 3 of the film cutting unit shown in cross-section in figure 4 in its respective non-operational position allowing one or several lengths of film material to pass freely therethrough and its operating position for cutting the ends of lengths of film that are to be spliced.

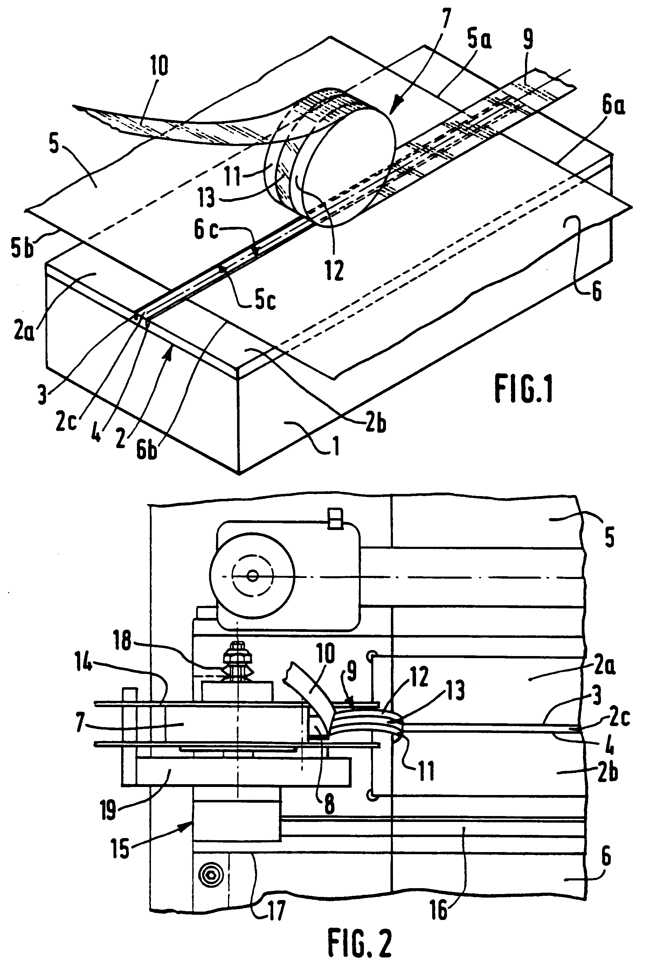

Figure 1 illustrates diagrammatically the method according to the invention for splicing two webs of thin film. A vacuum box 1 adapted to be connected to a source of negative pressure, in other words for providing air vacuum (not shown) carries a vacuum table 2 at its top portion, taking the form of a porous plate carrying two narrow parallel grooves 3 and 4 designed to guide a cutting blade, as will be explained below.

In the method according to the invention, two ultra-thin webs of film 5 and 6 (their minimum thickness can be as low as 0.9 micron but is most frequently of the order of several microns) are to be spliced to form a continuous run, in other words by the establishment of perfect or quasi-perfect alignment of the two webs of film. Before making the splice, the end portions of the two lengths of film are applied successively onto the vacuum table 2 which is under negative pressure. End portion 5 is for example the first one to be applied, and is carefully aligned over the whole surface of table 2, the vacuum pressure ensuring that it is firmly held onto the plane surface of the table 2, after which it is cut by a cutting blade (not shown here) which engages in guide groove 3 in order to provide a neat cut that is strictly perpendicular to the strip of film 5.

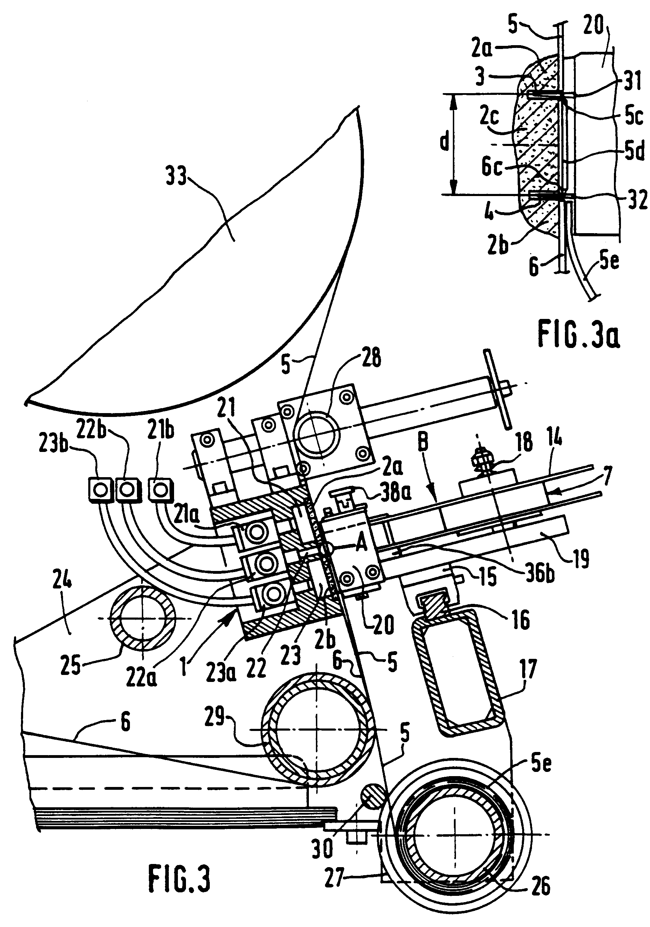

The three parts 2a, 2b and 2c of the vacuum table, respectively bordering each side of grooves 3 and 4 and lying between grooves 3 and 4, are separately linked to a source of negative pressure, consisting for example of a vacuum pump, via individual valves (reference to figure 3 will give an idea of the separate means employed for putting the three parts 2a, 2b, 2c of vacuum table 2 under vacuum). After making the crosswise cut through film 5, the negative pressure acting on the parts 2c and 2b of the vacuum table is removed, followed, if necessary, by setting of the corresponding part of the vacuum box to a pressure slightly above atmospheric pressure, in other words by blowing air through the porous plates of parts 2b and 2c. This makes it possible to detach and remove the offcut or trim left after cutting which is laying on parts 2b, 2c of the table, while the film portion 5 remains firmly held onto the part 2a of the table surface that is kept under sub-atmospheric pressure.

With the film 5 now ready for splicing, the end portion of a web of film 6 is now brought into exact alignment therewith (in other words fitting it exactly over film 5), this end, prior to cutting, extending beyond groove 4. The parts 2b and 2c of table 5 are now again put under sub-atmospheric pressure thus causing film 6 to adhere firmly to the table surface at the parts 2b and 2c thereof while the free end of film 6 simply lays on top of film 5 which itself is firmly held onto part 2a of the table surface. Next, the end of film 6 is cut by a knife guided by groove 4. After shutting off the sub-atmospheric pressure acting on table portion 2c (and changing over two slight positive pressure if needs be), the trim or offcut of film 6 that was adhering onto vacuum table part 2c can be detached from the table surface and then removed along with the remainder of the trim laying on top of the already cut film 5. By this means, the two facing ends of films 5 and 6 are provided with a clean cut which accurately is positioned and is strictly perpendicular to the longitudinal direction of the two webs of film that are now held in perfect alignment on the surface of the vacuum table.

In order to join the two end of films 5 and 6, an ultra-thin adhesive tape is employed which is prepared on a reel of composite material. This reel of composite material which is shown diagrammatically in its position of use and is indicated generally by reference numeral 7, consists of a wound composite roll 8 (see figure 2 as figure 1 does not show the composite structure of the tape).

The composite tape 8 consists of a first strip of thin film 9 in a polymeric material and a second strip 10 in a material which adheres poorly to adhesives, such as a silicone-impregnated backing layer, which here is substantially of the same width as the thin film strip, and is several times thicker than the thin film. Between the first thin film strip 9 and the second backing layer strip 10, the composite material includes two parallel layers 11, 12 of an adhesive having considerable adhesive power but exhibiting a far greater tendency to adhere to the polymeric material of film 9 than to the backing layer 10.

The adhesive is provided in the form of two parallel stripes 11, 12 running along the two outer sides of one face of the polymeric material film 9, leaving an adhesive-free region 13 therebetween the width of which is similar to or slightly greater than the distance separating the two guide grooves 3, 4. Adhesive that was applied to the backing layer 10 gets transferred onto the face of the first strip facing the backing layer when contact takes place between the adhesive and the surface of the first strip 9.

As can be seen in figure 1, prior to applying the thin film strip 9 simultaneously onto the two facing end portions of films 5 and 6 to be spliced and which are separated by vacuum table portion 2c, the backing layer 10 is first lifted off from the two adhesive stripes 11 and 12 and following this the thin strip 9 is accurately applied to the two film portions 5, 6 to be spliced starting from one end of the cut through the two films and proceeding to the other end of the cut while progressively peeling off the strip of silicone-impregnated backing layer. In this way, only a short length of the adhesive stripes 11 and 12 is exposed during the operation of applying the adhesive polymeric strip 9, thus considerably reducing the danger of the powerful adhesive material clinging to some foreign body which might accidently be present, such as dust or other pollutants. As soon as the bonding operation of polymeric film 9 has been completed up to the other end of the cut end of films 5 and 6, the tape 9 is cut and the silicone backing strip 10 can be folded back over the exposed adhesive stripes 11 and 12 in order to prevent any possible subsequent pollution thereof. Following this, the sub-atmospheric pressure acting over the whole vacuum table surface is released and the projecting two ends of the thin polymeric film 9 are trimmed transversely to the splices and in alignment with the respective edges 5a, 6a and 5b, 6b of the spliced length of film in order to terminate the splicing operation. The two stripes of adhesive 11 and 12 are in fact arranged so as to lie at a slight distance from the respective outer longitudinal sides of the adhesive tape 9 and, after application of the adhesive tape to the two webs, to stop slightly short of the two respective facing ends 5c, 6c of the two portions of spliced film 5, 6 whereby the adhesive film can spread slightly under pressure when there is contact between tape 9 and the portions 5 and 6 of spliced film without the adhesive overflowing beyond the respective edges.

The definitive splice between the two portions of film using the polymeric tape 9 which is extremely thin (whenever possible, it should have substantially the same thickness as the two web portions of film 5 and 6 to be spliced), and a layer of adhesive that is even thinner after being squeezed and drying, makes it possible to provide a splice structure which, when considered in the longitudinal sense of the spliced web, consists of a splice that is only twice as thick as the film to be spliced followed, in the central portion between the two splices, with a return to the thickness of the original film, this being followed by the second splice which again is only twice the thickness of the film, this ensuring that the splices behave perfectly during winding operations or, when for example the film is used as a backing material for a magnetic material coating for passage of a read/write head, or yet again, during slitting of the wide film into narrower strips. Practice has shown that the quality and accuracy of the splice are such that it cannot be detected by the naked eye, particularly in the case where the adhesive tape 9 used to provide the splice is of the same material as that of the two webs of film to be spliced.

In the partial side view of figures 3 and 3a the portions 2a, 2b, 2c of the vacuum table together with the crosswise cutting knife guide grooves 3 and 4 will be recognized. The composite adhesive tape 8 is wound on a dispenser reel 14 carried on a carriage 15 which moves transversely with respect to the film 5 and 6 to be spliced, on a dual-guiding slide 16, which, in figure 3, can be seen in cross-section, and is secured onto a strong cross member 17.

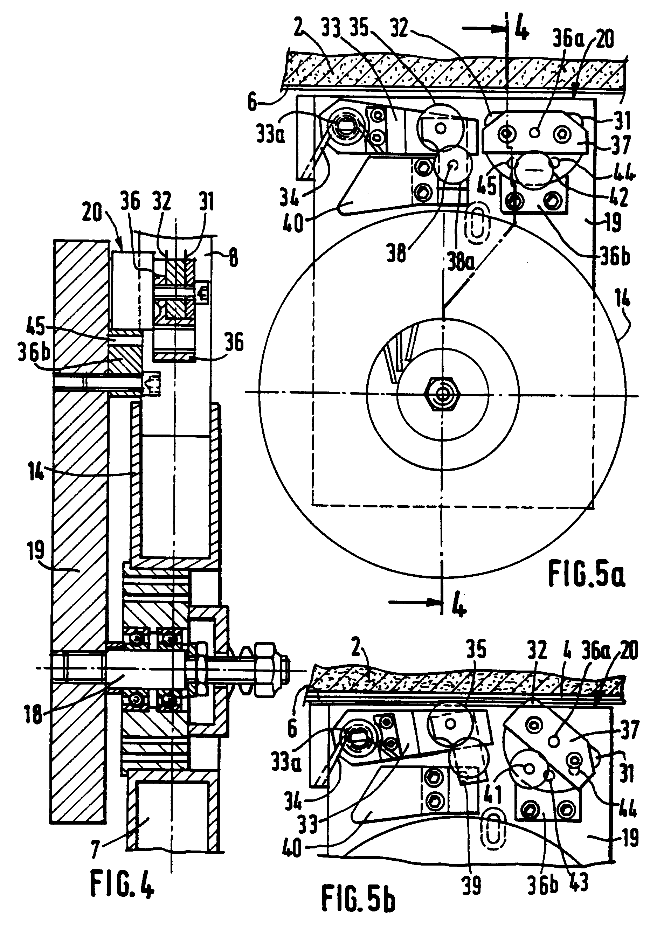

The reel 14 rotates on a central pivot 18 (see also figure 4) which is secured parallel to the plane of the vacuum table 2, on an upright 19 of the frame structure of carriage 15. The lower portion of upright 19 carries a cutting unit 20 arranged above the vacuum table 2 but only separated by a very small distance therefrom, this being shown in greater detail in figures 4 and 5.

Figure 3 also shows a cross-section through the vacuum box 1. Three separate chamber 21, 22, 23 are defined below the porous plate 2 of the vacuum table and each of these is connected by an airtight connector 21a, 22a, 23a and flexible or rigid conduits to valves 21b, 22b, 23b which can either be connected to a source of sub-atmospheric pressure (vacuum pump) or to atmospheric pressure to release a vacuum, or even, if necessary, to a source of compressed air to aid in the lifting off of portions of film that are adhering firmly to the vacuum table. The vacuum box 1 which, for example, is a metal casting, is carried by a frame structure 24 which includes, apart from cross member 17 carrying the slide 16, strengthening members (see cross member 25) an auxiliary winding roller 26 rotatably mounted on extension members 27, together with guide rolls 28, 29 and 30 for the film, roll 29 having an elastomer outer surface.

The structure of the vacuum table 2 in the critical region indicated inside circle A of figure 3, is shown on a much larger scale in figure 3a enabling the two grooves 3 and 4 to be seen, these having a rectangular cross-section separating the vacuum table into three successive regions 2a, 2b, 2c. A knife 31, and, respectively, 32 can be engaged into each of these grooves in order to cut the film which is firmly applied by suction onto the porous vacuum table 2.

In figure 3a, the film 6 is shown as having already been unwound via guide roll 29 until all spare film from the roll of film that preceded roll 33 has been wound off. The spare film end 6 is then cut by knife 32, its end edge 6c portion being "stuck" to portion 2b of vacuum table 2 by the sub-atmospheric pressure prevailing therebelow. The other portion of film, 5, which is to be spliced to portion 6 of the film is unwound from a new large diameter roll 33. Before making the splice, the film portion 5 is passed under guide roller 28 before moving on to the vacuum table 2 of which only chamber 23 is held under sub-atmospheric pressure. The end portion of film 5 can readily slide over vacuum table 2 to a position where it overlaps the end portion of film 6, careful positioning being carried out until film portions 5 and 6, which, in principle, have the same width come into exact alignment with each other, several turns of film portion 5 being rewound onto auxiliary roll 26 and the film adequately tensioned. After this, vacuum chambers 21 and 22 are put under sub-atmospheric pressure by operating valves 22b and 21b which causes the film portion 5 to firmly "stick" onto the vacuum table in the regions 2a and 2c. It is now possible to make a transverse cut through the film portion 5 by means of knife 31 which moves along inside groove 3, with the several turns of film wound onto auxiliary roll 26 remaining in place as offcut or trim. As a simplified alternative, to reduce the length of offcut at the end of film portion 5, the latter can be positioned manually and tensioned, this solution requiring however the intervention of highly skilled labor in order to guarantee the same splice quality.

In figure 3a, the two knives or blades 31 and 32 have been shown simultaneously cutting the film and leaving portions of offcut or trim 5d and 5e but is also possible, as shown in figures 5a and 5b, to only bring knife 31 into position. The portions of offcut 5d and 5e are removed after chamber 22 is no longer subject to sub-atmospheric pressure, by operating valve 22b (and blowing if necessary), the chamber 21 being kept under sub-atmospheric pressure in order to retain the end portion of film 5. The two end portions of films 5 and 6 are thus firmly held in position ready to receive the adhesive tape 9 using the method illustrated, as regards its initial steps, in figure 2, and described above with reference to figure 1. With the film portions 5 and 6 now spliced by means of polymeric tape 9 and its two stripes of adhesive 11 and 12, winding via guide roll 29 can now be restarted.

Figure 5b shows film portion 5 during a cutting operation. The frame member 19 carries an arm 33 which rotates about pin 33a and which is urged by means of a flat spring 34 towards film portion 5 (or 6) in order to apply a small press-on roller or hold-down cylinder 35 thereto. A knife support 36 which can rotate about a pivot pin 36a integral with a plate 36b screwed onto frame member 19, carries a knife holder 37 which retains the knife blades 31 and 32 which are 25 axially separated by a distance d, which corresponds to the distance between the grooves 3 and 4. In figure 5b, blade 32 is engaged in groove 4 for cutting film portion 6.

Figure 5a shows the non-operating position of cutting unit 20. A pin 38 with a knurled head 38a has been engaged in a hole 39 (see figure 5b) of a retaining plate 40, in order to hold press-on roller 35 away from the film 5, 6 which moves at high speed during winding. Similarly, a pin 41 with a knurled head 42 has been engaged into the central hole 43 of a series of three holes 43, 44, 45 the two outer holes of which, 44 and 45, are used for locking the cutting positions of the blades 31, 32 by engagement of pin 41 therein.

Perfect guiding, obtained by the two guiding surfaces of slide 16, of knife 31 or 32 in grooves 3 and 4 while film portions 5, 6 are kept held down by suction applied at both sides of the grooves 3 and 4, as well as perfect guiding of reel 14 which enables the adhesive tape 9 to be applied strictly perpendicular to the axis of film portions 5 and 6, ensures that the adhesive tape 9 is applied accurately to the end portions of film which are firmly held in position by sub-atmospheric pressure.

The present invention is obviously not limited to the embodiments which have been described and illustrated above but may be subject to numerous variations available to those skilled in the art without this however leading to a departure from the scope of the invention.

## Claims

1. A method for splicing a first web (5) of film or sheet material to a second web (6) thereof comprising the steps of:
applying an end portion of the first web (5) of film to the surface of a vacuum table (2) by applying sub-atmospheric pressure thereto and making a straight transverse cut through said first web (5) by a cutting means (20),
removing the sub-atmospheric pressure below the portion of said first web (5) that has been trimmed off and removing said trimmed-off portion of film,
applying the end portion of said second web (6) of film onto the portion of said vacuum table (2) not covered by said first web (5) and allowing the end of said second web (6) to overlap the previously-trimmed first web (5), the whole surface of said vacuum table (2) being under sub-atmospheric pressure,
providing a straight transverse cut through said second web (6) by the cutting means (20),
removing the thus-trimmed portion of said second film (6) from the surface of said table together with the portion thereof overlapping said first web (5), and simultaneously applying to said first and second web end portions an adhesive tape (8) and then removing said sub-atmospheric pressure over the whole surface of said vacuum table (2) in order to release the spliced webs of film,
**characterized in that**
for cutting said first web (5) said cutting means (20) is used in cooperation with a first transverse groove (3) provided in said vacuum table (2),
for cutting said second web (6) said cutting means (20) is used in cooperation with a second groove (4) in said vacuum table parallel to said first groove (3) and adjacent thereto, and
in that the adhesive tape (8) does not contain adhesive at least on the portion (13) that faces the gap between said first and second grooves (3,4).

2. A method according to claim 1, wherein said adhesive tape (8) carries at the surface thereof two continuous stripes (11,12) of adhesive which extend up to the region of, but not exactly to the edge of, the lateral sides of said tape (8) where it ceases to be in contact with either of said web portions (5,6) in order to prevent any overflow of adhesive resulting from supplementary spreading of the adhesive during the passage of said tape over the two film portions to be spliced.

3. A method according to claim 2, wherein said adhesive tape (8) is covered, on the side thereof bearing said continuous stripes (11,12) of adhesive, with a backing strip or layer (10) in a material exhibiting low adhesion towards said adhesive, said adhesive tape (8) covered with said backing layer (10) being provided in roll form, said roll (14) being unwound onto the facing end portions of the two webs (5,6) of film to be spliced while removing said backing strip (10) immediately prior to applying said adhesive tape (8) onto the two facing end portions of said webs.

4. A method according to claim 1, wherein during application of said adhesive tape (8) onto the two end portions of said webs (5,6) to be spliced, the part (2c) of said vacuum table (2) comprised between said first and second grooves (3,4) is maintained under sub-atmospheric pressure in order to retain said adhesive tape (8) firmly pressed onto the end portions of said first and second webs (5,6).

5. A device for carrying out the method according to claim 1 comprising a roll (33) supplying a web of film material, a roll (26) for winding a web of film material and a splicing table (2) adapted to be selectively subject to sub-atmospheric pressure and having a first groove (3) therein defining a cutting line over which either of first or second continuous webs (5,6) of film can be placed, and means for applying a splicing tape (8) to unite said first and second webs of film, wherein said splicing table (2) includes a second groove (4) that is parallel to said first groove (3), said first and second grooves (3,4) being perpendicular to the longitudinal direction of said first and second webs (5,6) of film and being separated by a small spacing from each other, said small spacing being substantially less than the width of said splicing tape (8), said vacuum table (2) being split into three regions (2a,2b,2c) each individually adapted to be put under sub-atmospheric pressure and comprising the region (2c) between the two said grooves (3,4) and two regions (2a,2b) at each side of the said grooves (3,4), said regions being adapted to be linked by valve means (21b,22b, 23b) to sub-atmospheric pressure generating means whereby each one of said three regions can be individually or simultaneously put under sub-atmospheric pressure in order to retain at least one of said webs (5,6) of film firmly on said table (2) or to allow removal thereof by releasing said sub-atmospheric pressure, and cutting means (20) for cooperation with each of said first and second grooves (3,4) for selectively cutting said first and second web (5,6).

6. A device according to claim 5, wherein it includes a reel (14) for applying an adhesive splicing tape (8) to film web portions (5,6) retained on said vacuum table (2) by unwinding said adhesive tape therefrom, said application reel (14) being rotatably mounted on a support (15) adapted to move in a direction perpendicular to the plane of said vacuum table (2) up to a position where it no longer hinders the passage of web of said film to a winding unit.

7. A device according to claim 5 wherein it includes a carriage (15) able to move along sliding guiding means (16,17) perpendicular to the longitudinal direction of advance of said web of film and which simultaneously carries in a releasable manner, a roll (7) of adhesive tape (8) that is substantially centered on the two grooves (3,4) of said vacuum table (2), said carriage (15) being able to move between an operating position and a non-operating position, at least one cutting unit (20) adapted to apply, in said operating position, a knife blade means (31,32) into at least one of said grooves in order to cut said web portions (5,6) of film at positions corresponding to said grooves (3,4) whereby said cut web portions of film are only separated by the gap between said two parallel grooves (3,4).

8. A device according to claim 7, wherein said cutting unit (20) includes a blade holder (36) clamping two thin cutting blades (31,32) adapted to pivot about a pivot pin (36a) to adopt one of three positions that are manually locked by a locking means (41), comprising two cutting positions and a central non-active position.

9. A device according to claim 7, wherein said cutting unit (20) includes a pivoting arm carrying a press-on roller (35) which is urged towards the surface of said vacuum table (2) by spring pressure.

10. A device according to claim 9, wherein said pivoting arm (33) is manually lockable in a non-active position against the urging force of said spring means (34) by manual locking means (38).

## Patentansprüche

1. Verfahren zum Verbinden einer ersten Bahn (5) aus Folien- oder Bahnmaterial mit einer zweiten Bahn (6) daraus, mit den Schritten:
Auflegen eines Endbereiches der ersten Folienbahn (5) auf die Oberfläche eines Vakuumtisches (2) durch Aufbringen von Unterdruck auf diesen und Ausführen eines geraden querverlaufenden Schnittes durch die erste Bahn (5) mittels einer Schneideinrichtung (20),
Wegnehmen des Unterdrucks unter dem Teil der ersten Bahn (5), der abgeschnitten worden ist, und Entfernen des abgeschnittenen Folienteils,
Auflegen des Endbereiches der zweiten Folienbahn (6) auf den nicht von der ersten Bahn (5) bedeckten Bereich des Vakuumtisches (2) und Ermöglichen, daß das Ende der zweiten Bahn (6) die zuvor beschnittene erste Bahn (5) überlappt, wobei die gesamte Oberfläche des Vakuumtisches (2) unter Unterdruck steht,
Vorsehen eines geraden querverlaufenden Schnittes durch die zweite Bahn (6) mittels der Schneideinrichtung (20),
Entfernen des so abgeschnittenen Bereiches der zweiten Folie (6) von der Oberfläche des Tisches zusammen mit dem Teil der Folie, der die erste Bahn (5) überlappt, und gleichzeitiges Aufbringen eines Klebebandes (8) auf die Endbereiche der ersten und der zweiten Bahn und anschließendes Wegnehmen des Unterdrucks über der gesamten Oberfläche des Vakuumtisches (2) zum Freigeben der miteinander verbundenen Folienbahnen,
**dadurch gekennzeichnet, daß** zum Schneiden der ersten Bahn (5) die Schneideinrichtung (20) zusammenwirkend mit einer in dem Vakuumtisch (2) vorgesehenen ersten querverlaufenden Nut (3) verwendet wird,
zum Schneiden der zweiten Bahn (6) die Schneideinrichtung (20) zusammenwirkend mit einer in dem Vakuumtisch (2) parallel und benachbart zu der ersten Nut (3) angeordneten zweiten Nut (4) verwendet wird, und
dadurch, daß das Klebeband (8) wenigstens an demjenigen Teil (13), der dem Zwischenraum zwischen den ersten und zweiten Nuten (3,4) zugewandt ist, keinen Kleber enthält.

2. Verfahren nach Anspruch 1, bei dem das Klebeband (8) auf seiner Oberfläche zwei durchgehende Klebestreifen (11,12) aufweist, die sich bis zu dem Bereich der lateralen Seiten des Bandes (8), jedoch nicht genau bis zu deren Rand erstrecken, wo es mit keinem der Bahnteile (5,6) mehr in Kontakt ist, um jegliches Überfließen von Kleber infolge zusätzlicher Ausbreitung des Klebers während des Durchlaufs des Bandes über die beiden zu verbindenden Folienteile zu verhindern.

3. Verfahren nach Anspruch 2, bei dem das Klebeband (8) auf der die durchgehenden Klebestreifen (11,12) tragenden Seite mit einem Rückenstreifen oder einer Rückenschicht (10) aus einem Material bedeckt ist, das gegenüber dem Kleber geringe Haftung aufweist, wobei das mit der Rückenschicht (10) bedeckte Klebeband (8) in Rollenform vorgesehen ist, wobei die Rolle (14) auf die einander zugewandten Endbereiche der beiden miteinander zu verbindenden Folienbahnen (5,6) abgewickelt wird, wobei der Rückenstreifen (10) unmittelbar vor dem Aufbringen des Klebebandes (8) auf die beiden einander zugewandten Endbereiche der Bahnen entfernt wird.

4. Verfahren nach Anspruch 1, bei dem während des Aufbringens des Klebebandes (8) auf die beiden Endbereiche der miteinander zu verbindenden Bahnen (5,6) der zwischen den ersten und zweiten Nuten (3,4) befindliche Teil (2c) des Vakuumtisches (2) unter Unterdruck gehalten wird, um das Klebeband (8) fest gegen die Endbereiche der ersten und zweiten Bahnen (5,6) gedrückt zu halten.

5. Vorrichtung zur Ausführung des Verfahrens gemäß Anspruch 1, mit einer eine Bahn aus Folienmaterial liefernden Rolle (33), einer Rolle (26) zum Aufwickeln einer Bahn aus Folienmaterial und einem Spleißtisch (2), der selektiv einem Unterdruck aussetzbar ist und eine erste Nut (3) aufweist, die eine Schneidlinie bildet, über der jede der ersten oder zweiten durchgehenden Folienbahnen (5,6) angeordnet werden kann, sowie einer Einrichtung zum Aufbringen eines Spleißbandes (8) zum Zusammenfügen der ersten und der zweiten Folienbahn, wobei der Spleißtisch (2) eine zweite Nut (4) aufweist, welche parallel zu der ersten Nut (3) ist, wobei die ersten und Zweiten Nuten (3,4) senkrecht zur Längsrichtung der ersten und zweiten Folienbahn (5,6) verlaufen und durch einen geringen Abstand voneinander getrennt sind, wobei der geringe Abstand wesentlich kleiner als die Breite des Spleißbandes (8) ist, wobei der Vakuumtisch (2) in drei Regionen (2a,2b,2c) aufgeteilt ist, die jeweils einzeln unter Unterdruck setzbar sind und die die Region (2c) zwischen den beiden Nuten (3,4) und zwei Regionen (2a,2b) zu jeder Seite der Nuten (3,4) umfassen, wobei die Regionen durch Ventileinrichtungen (21b,22b,23b) mit einer Unterdruckerzeugungseinrichtung verbindbar sind, wodurch die drei Regionen jeweils einzeln oder gleichzeitig unter Unterdruck gesetzt werden können, um wenigstens eine der Folienbahnen (5,6) fest auf dem Tisch (2) zu halten oder deren Entfernen durch Aufheben des Unterdrucks zu ermöglichen, sowie mit einer Schneideinrichtung (20) zum Zusammenwirken mit jeder der ersten und zweiten Nuten (3,4) zum selektiven Schneiden der ersten und zweiten Bahnen (5,6).

6. Vorrichtung nach Anspruch 5, mit einer Spule (14) zum Aufbringen eines Klebespleißbandes (8) auf auf dem Vakuumtisch (2) gehaltene Folienbahnbereiche (5,6) durch Abwickeln des Klebebandes, wobei die Aufbringspule (14) drehbar an einem Halter (15) befestigt ist, der in einer senkrecht zu der Ebene des Vakuumtisches (2) verlaufenden Richtung bis zu einer Position bewegbar ist, in der er den Durchlauf der Folienbahn zu einer Aufwickeleinheit nicht mehr behindert.

7. Vorrichtung nach Anspruch 5, mit einem Schlitten (15), der entlang einer Gleitführung (16,17) bewegbar ist, die sich vertikal zu der Längsrichtung des Vorschubs der Folienbahn erstreckt, und der gleichzeitig lösbar eine Rolle (7) mit Klebeband (8) trägt, die im wesentlichen an den beiden Nuten (3,4) des Vakuumtisches (2) zentriert ist, wobei der Schlitten (15) zwischen einer Arbeitsposition und einer Ruheposition bewegbar ist, wobei mindestens eine Schneideinheit (20) derart ausgebildet ist, daß sie in der Arbeitsposition eine Messerklingeneinrichtung (31,32) in mindestens eine der Nuten einbringt, um die Folienbahnbereiche (5,6) an den Nuten (3,4) entsprechenden Positionen zu schneiden, wodurch die abgeschnittenen Folienbahnbereiche nur durch den Zwischenraum zwischen den beiden parallelen Nuten (3,4) voneinander getrennt sind.

8. Vorrichtung nach Anspruch 7, bei der die Schneideinrichtung (20) einen Klingenhalter (36) aufweist, welcher zwei dünne Schneidklingen (31,32) einspannt, die um einen Drehzapfen (36a) schwenkbar sind, um eine von drei Positionen einzunehmen, die von Hand mittels einer Feststelleinrichtung (41) festgestellt werden und zwei Schneidpositionen und eine mittlere inaktive Position umfassen.

9. Vorrichtung nach Anspruch 7, bei der die Schneideinheit (20) einen Schwenkarm aufweist, der eine Andrückwalze (35) trägt, die durch Federdruck gegen die Fläche des Vakuumtisches (2) gedrückt wird.

10. Vorrichtung nach Anspruch 9, bei der der Schwenkarm (33) gegen die Druckkraft der Federeinrichtung (34) durch eine manuelle Feststelleinrichtung (38) in einer inaktiven Position von Hand feststellbar ist.

## Revendications

1. Un procédé pour raccorder en continuité un premier feuil (5) de film ou de matériau en feuille à un second feuil (6) du même matériau, comprenant les étapes consistant :
- à appliquer une partie d'extrémité du premier feuil (5) de film sur la surface d'une table à dépression (2) en y appliquant une dépression et à réaliser une coupe transversale droite à travers ledit premier feuil (5) à l'aide de moyens de coupe (20),
- à supprimer la dépression agissant sous la partie dudit premier feuil (5) qui a été tranchée et à évacuer ladite partie tranchée du film,
- à appliquer la partie d'extrémité dudit second feuil (6) du film sur la partie de ladite table à dépression (2) non recouverte par ledit premier feuil (5) et à permettre à l'extrémité dudit second feuil (6) de recouvrir le premier feuil (5) précédemment découpé, la totalité de la surface de ladite table à dépression (2) étant mise en dépression,
- à prévoir une coupe transversale droite à travers ledit second feuil (6) à l'aide des moyens de coupe (20),
- à évacuer la partie ainsi découpée dudit second film (6) de la surface de ladite table en même temps que la partie dudit second film recouvrant ledit premier feuil (5), et à appliquer simultanément auxdites première et seconde parties d'extrémité de feuil un ruban adhésif (8), et à supprimer ensuite ladite dépression sur la totalité de la surface de ladite table à dépression (2) afin de libérer les feuils de film raccordés en continuité,
caractérisé en ce que :
- pour couper ledit premier feuil (5), lesdits moyens de coupe (20) sont utilisés en coopération avec une première rainure transversale (3) prévue dans ladite table à dépression (2),
- pour couper ledit second feuil (6), lesdits moyens de coupe (20) sont utilisés en coopération avec une seconde rainure (4) dans ladite table à dépression parallèlement à ladite première rainure (3) et adjacente à celle-ci, et
- en ce que le ruban adhésif (8) ne contient pas d'adhésif au moins sur la partie (13) qui fait face à l'intervalle entre lesdites première et seconde rainure (3, 4).

2. Un procédé selon la revendication 1, dans lequel ledit ruban adhésif (8) comporte à sa surface deux bandes continues (11, 12) d'adhésif qui s'étendent jusqu'à la zone, mais pas exactement jusqu'au bord, des côtés latéraux dudit ruban (8) où celui-ci cesse d'être en contact avec l'une ou l'autre desdites parties de feuil (5, 6), de manière à éviter tout débordement d'adhésif vers l'extérieur résultant d'un étalement supplémentaire de l'adhésif au cours du passage dudit ruban sur les deux parties de film à raccorder en continuité.

3. Un procédé selon la revendication 2, dans lequel ledit ruban adhésif (8) est recouvert, du côté portant lesdites bandes continues (11, 12) d'adhésif, d'une bande ou couche de protection (10) en un matériau présentant une faible adhérence audit adhésif, ledit ruban adhésif recouvert de ladite couche de protection (10) étant enroulé en un rouleau, ledit rouleau (14) étant déroulé sur les parties d'extrémité en regard des deux feuils (5, 6) du film à raccorder en continuité, en enlevant ladite bande de protection (10) juste avant l'application dudit ruban adhésif (8) sur les deux parties d'extrémité en regard desdits feuils.

4. Un procédé selon la revendication 1, dans lequel durant l'application dudit ruban adhésif (8) sur les deux parties d'extrémité desdits feuils (5, 6) à raccorder en continuité, la partie (2c) de ladite table à dépression (2) comprise entre lesdites première et seconde rainures (3, 4), est maintenue en dépression, afin de retenir ledit ruban adhésif (8) fermement pressé sur les parties d'extrémité desdits premier et second feuils (5, 6).

5. Un dispositif pour la mise en oeuvre du procédé selon la revendication 1, comportant un cylindre (33) de déroulage d'une bande de matériau en feuil, un cylindre (26) d'enroulage d'une bande de matériau en feuil et une table d'assemblage en continuité (2) susceptible d'être sélectivement mise en dépression et présentant une première rainure (3) y définissant une ligne de coupe sur laquelle peut être placée le premier ou le second feuil continu (5, 6) de film, ainsi que des moyens d'application d'un ruban d'assemblage (8) desdits premier et second feuil de film, dans lequel ladite table d'assemblage en continuité (2) comporte une seconde rainure (4) qui est parallèle à ladite première rainure (3), lesdites première et seconde rainures (3, 4) étant perpendiculaires à la direction longitudinale desdits premier et second feuils (5, 6) de film et étant séparées l'une de l'autre d'un petit intervalle, ledit petit intervalle étant sensiblement inférieur à la largeur dudit ruban d'assemblage en continuité (8), ladite table à dépression (2) étant séparée en trois zones (2a, 2b, 2c) susceptibles d'être mises en dépression séparément et comprenant la zone (2c) entre lesdites deux rainures (3, 4) et les deux zones (2a, 2b) de chaque côté desdites rainures (3, 4), lesdites zones étant susceptibles d'être reliées par des moyens de valve (21b, 22b, 23b) à des moyens générateurs de dépression, de manière à permettre de réaliser séparément ou simultanément la mise en dépression des trois zones, afin de retenir au moins l'un desdits feuils (5, 6) de film fermement sur ladite table (2) ou de permettre leur enlèvement de ladite table par suppression de ladite dépression, et des moyens de coupe (20) pour coopérer avec chacune desdites première et seconde rainure (3, 4) pour couper sélectivement lesdits premier et second feuils (5, 6).

6. Un dispositif selon la revendication 5, qui comporte un touret (14) d'application d'un ruban d'assemblage adhésif (8) d'assemblage en continuité à des parties de feuil de film (5, 6) retenues sur ladite table de dépression (2) en y déroulant ledit ruban adhésif, ledit touret d'application (14) étant monté rotatif sur un support (15) mobile dans la direction perpendiculaire au plan de ladite table à dépression (2) jusqu'à une position où il n'entrave plus le passage du feuil dudit film vers un organe d'enroulage.

7. Un dispositif selon la revendication 5, qui comporte un chariot (15), mobile sur des moyens de guidage ou coulissement (16, 17) perpendiculaires à la direction longitudinale d'avance dudit feuil de film et qui portent simultanément, d'une façon amovible, un rouleau (7) de ruban adhésif (8) centré sensiblement sur les deux rainures (3, 4) de ladite table à dépression (2), ledit chariot (15) étant mobile entre une position de service et une position inactive, au moins un organe de tranchage (20) susceptible d'appliquer, dans ladite position de service, des moyens de lames de couteaux (31, 32) dans au moins l'une desdites rainures, afin de découper lesdites parties de feuil (5, 6) du film aux emplacements correspondant auxdites rainures (3, 4), de telle manière que lesdites parties de feuil de film coupées soient seulement séparées par l'intervalle entre lesdites deux rainures parallèles (3, 4).

8. Un dispositif selon la revendication 7, dans lequel ledit organe de tranchage (20) comporte un porte-lames (37) pressant deux lames de coupes minces (31, 32) susceptibles de pivoter autour d'un axe de pivotement (36a) pour leur faire adopter l'une parmi trois positions, qui sont manuellement verrouillées par un moyen de verrouillage (41) et qui comprennent deux positions de coupe et une position centrale inactive.

9. Un dispositif selon la revendication 7, dans lequel ledit organe de tranchage (20) comporte un bras pivotant portant un rouleau de pressage qui est repoussé vers la surface de ladite table à dépression (2) par la pression d'un ressort.

10. Un dispositif selon la revendication 9, dans lequel ledit bras pivotant (33) est susceptible d'être verrouillé manuellement en position inactive à l'encontre de la force de sollicitation desdits moyens de ressort (34) par des moyens de verrouillage manuel (38).
